# EUROPEAN PATENT SPECIFICATION

(11) **EP 1 657 325 B1**
(45) Date of publication and mention of the grant of the patent: **18.08.2010**
(21) Application number: 05024147.0
(22) Date of filing: 04.11.2005
(51) Int. Cl.: C23C 28/00, B05D 7/14, C09D 5/08, E04H 12/08, E01F 9/011

(54) **Steel post embedded in the ground having corrosion control property**
Im Boden versinkten Stahlpfosten mit Korrosionsschutz
Poteau en acier enterrée dans le sol protegé contre la corrosion

(30) Priority: 04.11.2004 JP 2004320301
(43) Date of publication of application: 17.05.2006
(73) Proprietor: Nippon Steel Corporation, Tokyo 100-8071 (JP)
(72) Inventor: Yamamoto, Masahiro c/o Nippon Steel Corporation, Futtsu-shi Chiba 293-8511 (JP); Yamakawa, Shintaro, Tokai-shi Aichi 476-8686 (JP)
(74) Representative: Vossius & Partner

(56) References cited:
- GB-A- 895 490
- GB-A- 2 378 710
- PATENT ABSTRACTS OF JAPAN vol. 2003, no. 12, 5 December 2003 (2003-12-05) & JP 2004 202693 A (NIPPON STEEL CORP), 22 July 2004 (2004-07-22)
- PATENT ABSTRACTS OF JAPAN vol. 2003, no. 04, 2 April 2003 (2003-04-02) & JP 2002 371372 A (NIPPON STEEL CORP), 26 December 2002 (2002-12-26)
- PATENT ABSTRACTS OF JAPAN vol. 2003, no. 12, 5 December 2003 (2003-12-05) & JP 2004 211292 A (NIPPON TELEGRAPH & TELEPHONE EAST CORP), 29 July 2004 (2004-07-29)

## Description

The present invention relates to a lamp post, a sign post, chain link fence pole, or other steel post used with a bottom part embedded outdoors, more particularly technology for preventing corrosion of embedded parts of these steel posts.

Lamp posts, sign posts, etc. are fabricated from various types of materials, but steel materials are made particularly frequent use of in view of the balance of strength and price. These are often used with bottom parts embedded outdoors. At this time, the steel materials are prevented from being corroded by some sort of method, for example, by the method of zinc plating or coating. These corrosion prevention methods are designed to protect them up to several meters of above-ground parts by shielding the steel materials from rain, wind, condensation, and other corrosive factors.

However, even if these parts are prevented from corrosion, it is known that the parts right above where the posts are embedded are easily corroded *(47th Zairyoto-Kankyo Conference Preprints, 195 (2000)).* In this case, as one method for suppressing corrosion, the method of providing corrosion-proofing layers above and below the embedded level is disclosed in JP-A-2001-371372. This corrosion-proofing means prevents corrosion due to the galvanic reaction between a part buried in concrete and a part right above it. However, the steel posts installed along pavements, in parks, and other locations where people walk are often used by dogs to mark their territories. There are reports of this causing a problem of corrosion (*25th Japan Road Conference Preprints, 06011 (2003)*).

In this way, it has been pointed out that the frequently used steel posts are used by dogs to mark their territories and sometimes collapse due to the corrosion resulting from this. It is therefore necessary to give durability against territorial marking by dogs.

GB-A-2 378 710 discloses lighting columns used for supporting lamps, where the base portion is made of corrosion resistant steel, containing such as C: 0.05 - 0.35%, Mn: 0.1-2.5%, Si: 0.1 - 2%, S: 0.01 - 0.3%, P: 0.01 - 0.5%, Cr: 0.1- 5%, Ni: 0.1 - 5%, Cu: 0.1 - 3%, and the base portion of the lighting column is galvanized, and preferably coated with corrosion resistant paint.

An object of the present invention is to provide a steel post superior in controllability of corrosion at the embedded part even when used by dogs etc. to mark their territories.

The inventors engaged in detailed laboratory studies on the effect of corrosion due to canine urine and examined closely the phenomenon of acceleration of corrosion due to canine urine. As a result of various studies, they found that while canine urine contains ammonium ions in a concentration of only 10 ppm or less, the urine is broken down and changed by the outside environment resulting in over a 100-fold increase in the concentration of ammonium ions and creating a solution including 0.1% or more of the ions and that further these ammonium ions are the main cause behind deterioration of steel materials and zinc plating, tar epoxy coatings, and other usual corrosion-proofing coatings of post materials. They thereby solved the problem of corrosion due to territorial marking by dogs by increasing the durability against aqueous solutions containing ammonium ions.

The object can be achieved by the features specified in the claims.

By using the steel post according to the present invention, the problem of corrosion at the embedded part, in particular corrosion due to marking of territories by dogs, can be solved and collapse of poles endangering pedestrians or blocking traffic can be avoided. Further, the lifetime of the materials can be lengthened, the replacement intervals of lamp posts etc. can be lengthened, and the costs of maintaining roads, parks, etc. can be reduced.

These and other objects and features of the present invention will become clearer from the following description of the preferred embodiments given with reference to the attached drawings, wherein:
FIG. 1 is a view explaining the configuration of the present invention and
FIG. 2 is a schematic view of the configuration of a test sample of an example of the present invention.

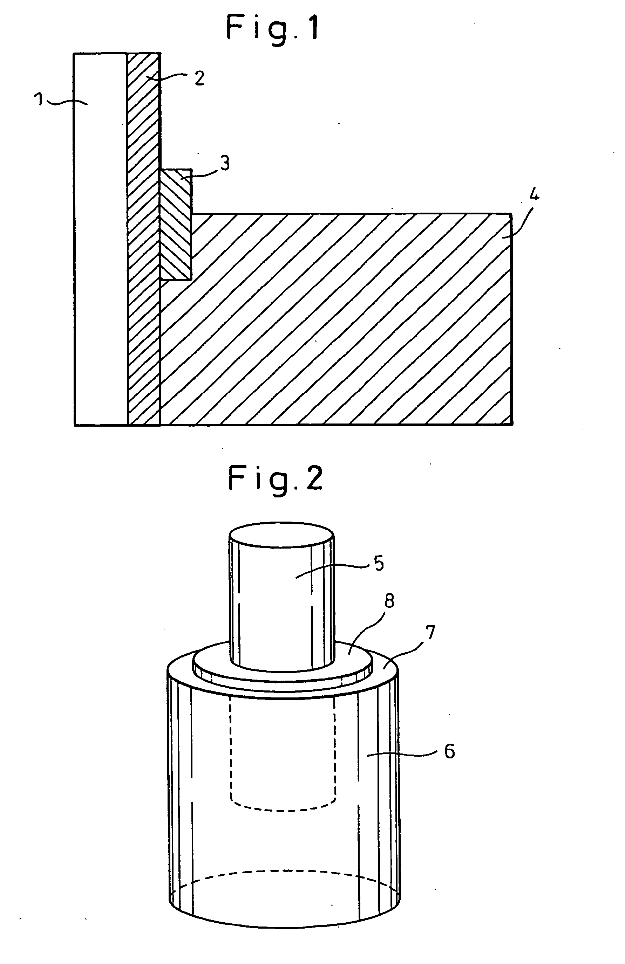

Below, the present invention will be explained in detail with reference to the drawings. FIG. 1 is a view explaining the configuration of the present invention. As shown in FIG. 1, the invention provides a steel post 1 having a corrosion-proofing coating layer (Zn plating) 2, provided with a corrosion-proofing material 3 superior in durability against an aqueous solution containing ammonium ions along the outside of the steel post to at least 50 mm up to the atmosphere side and down to the embedded material side at a top end of an interface where the steel post 1 and the material embedded in (ground or concrete) 4 contact each other.

The corrosion-proofing coating of the present invention is not particularly limited so long as it is a coating applied for the purpose of protecting the steel post from atmospheric corrosion, but includes a tar epoxy or polyester-based coating, a polyethylene or PVC resin lining, etc. Further, in the present invention, the steel post is preferably one given a zinc-based plating. That is, the present invention is effective even for the above corrosion-proof coating materials, but as shown in the examples, the present invention is particularly remarkable in effect for a steel post using a zinc-based plating.

For the zinc-based plating at this time, the plating prescribed by JIS-H8641 may be applied. Further, alloy plating comprised of zinc to which Al, Mg, or another alloying ingredient is added has similar effects. The "steel post" prescribed in the present invention means a post formed by a core material of steel and of generally a steel pipe shape, but also includes tapered poles of steel pipe gradually changed in diameter, angular pipe shapes, columns, steel sections, etc., i.e., is not particularly limited in shape, and also includes shapes of complicated designs.

In the present invention, a corrosion-proofing material superior in durability against an aqueous solution containing ammonium ions covers the outside of the steel post to at least 50 mm up to the atmosphere side and down to the embedded material side from a top end of an interface where the steel post and the material embedded in contact each other. The top end of an interface where the steel post and the material embedded in contact each other corresponds to the surface level of the material embedded in. If covering the steel post by less than 50 mm up to the atmosphere side and down to the embedded material side from the top end of the interface, the result will be a length at which a galvanic reaction due to an electrochemical reaction may occur at the time the post is embedded. If 50 mm or more, this galvanic reaction will become extremely small and will no longer pose any practical problem. Further, to obtain a completely negligible level, a span of 150 mm or more is required. The upper limit of the covering is not particularly limited, but if considering the problem height to be the range which a dog may mark his territory on, 1000 mm is sufficient.

Further, in the present invention, the corrosion-proofing material superior in durability against an aqueous solution containing ammonium ions is a corrosion resistant metal material of a thickness of at least 0.1 mm having an organic resin binder layer at the steel post side. The metal having corrosion resistance against ammonium ions at this time includes titanium and titanium alloys, nickel and nickel alloys, high corrosion resistant stainless steel, gold, silver, platinum, etc. However, copper alloys etc., which are generally considered to have a high corrosion resistance, have low resistance to corrosion by an aqueous solution of ammonium ions and therefore cannot be used. In terms of practical performance, it is desirable that the amount of corrosion after immersion in an aqueous solution of ammonium ions having a pH of 12.5 for one week be less than the detection limit.

Further, in the present invention, the thickness of the corrosion resistant metal is 0.1 mm or more. In principle, with a metal having resistance to corrosion by ammonium ions, the thickness is not relevant, but in actuality if covering a steel post which is subsequently embedded for installation, if less than 0.1 mm, pinholes will form and corrosion will proceed from those locations. For this reason, a thickness of at least 0.1 mm is required. The upper limit of thickness is not particularly defined, but if considering the cost and production efficiency, less than 1 mm is suitable.

Further, the organic resin binder layer used in the present invention is preferably one able to strong bond the steel post and the corrosion resistant metal material and having long-term durability. A butyl rubber sheet or polyethylene foam sheet coated with an epoxy-based or urethane-based binder or an acrylic-based tackifier or a butyl rubber sheet etc. impregnated with an acrylic-based tackifier may be used. Further, these binders are not particularly limited in thickness, but the lower limit beyond where the corrosion resistant metal material and steel post will not electrically bond is preferably 100 µm and the upper limit, from the viewpoint of cost, is preferably 3 mm.

Further, in the present invention, the corrosion-proof material superior in durability to an aqueous solution containing ammonium ions is an epoxy-based coating of a thickness of 50 µm or more including a pigment having the ability to neutralize ammonium ions in an amount of 1 wt% to less than 30 wt%. Here, the "ability to neutralize ammonium ions" means the ability to lower the pH when dissolved in a solution containing ammonium ions. In the present invention, the following was shown.

That is, a commercially available ammonia water (28% concentration) was diluted 5.6-fold to prepare a 5% aqueous solution containing ammonium ions. The pH was about 12.0. When adding to this the above pigment in a powder state to 1%, that is, when adding 1 g to 100 g of the aqueous solution, the pH fell by 1, that is, to 11.0 or less. This case was deemed as one of the ability to neutralize ammonium ions.

Pigments having such an ability include compounds of molybdates, borates, vanadinates, phosphates, and sulfates. Among these, the ones suitable as pigments for coatings are ones which have low solubility in water. For example, phosphates of calcium, magnesium, aluminum, and zinc, zinc borate, calcium sulfate, ammonium vanadinate, vanadium oxide, etc. and mixtures of two or more of the same increase the ability to neutralize ammonium ions. Here, inclusion of such pigments in amounts of 1 wt% or more enables the above performance to be sufficiently secured. If over 30 wt%, the coating itself becomes fragile, so conversely the durability drops.

The epoxy-based coating prescribed in the present invention is not particularly limited, but a coating obtained from a coating material of a type mainly comprising a varnish including epoxy group terminals and curing by an amine, polyamine, or isocyanate is preferable. If necessary, a bulk pigment or solvent, a reaction aid, a reactive diluent, a non-reactive diluent, etc. may also be added. Further, in the present invention, the corrosion-proof material constituted by the epoxy-based coating has a thickness of 50 µm or more. If less than 50 µm in thickness, the formation of pinholes in the coating becomes hard to suppress, the pinholes enable dissolution of the underlying steel material, and therefore the durability cannot be secured. More preferably, the thickness is 150 µm or more, by which the durability is improved. Further, the upper limit of the thickness is not particularly set, but with a thickness over 500 µm, no improvement in effect is seen any longer and the cost swells by that amount, so 500 µm is preferable.

### Example 1

The test sample shown in FIG. 2 was fabricated. The test sample 5 (steel post) had an outside diameter of 60.5 mm, a length of 200 mm, and a thickness of 3.8 mm. The test sample 5 was given the corrosion-proofing coating shown in Table 2 in advance and further covered with the metal-based corrosion-proofing material shown in Table 2. The sample was embedded in concrete 6 of a diameter of 100 mm to about half of its 200 mm length direction. Further, a 20 mm high PVC frame 7 was placed over the concrete. This was filled with an embedded material 8 comprised of a mixture of commercially available gardening use soil and decomposing leaves etc. The test sample was sprayed once a day with an aqueous solution of substantially the same ingredients as average canine urine shown in Table 1. After six months, the state of corrosion was evaluated by viewing the occurrence of corrosion and any pitting. The tested materials and their test results are shown in Table 2. The steel post according to the present invention clearly is superior in durability in a solution of a combination of canine urine and soil.

**Table 1**

| Ingredient | % composition (wt%) |
|---|---|
| Urea | 0.67 |
| Uric acid | 0.0069 |
| Creatinine | 0.090 |
| NaCl | 0.28 |
| KCL | 0.22 |

**Table 2**

| No. | Material | Corrosion proofing coating | Corrosion proofing material | | | | | State of corrosion | Pitting | Remarks |
|---|---|---|---|---|---|---|---|---|---|---|
| | | | Binder layer | Binder layer thickness (mm) | Metal | Thick ness (mm) | Coated length*1 (mm) | | | |
| 1 | Ord. steel | Zn plating | Butyl rubber + binder | 1.5 | Ti | 0.1 | 60 | No corrosion | None | Inv. .ex. |
| 2 | Ord. steel | Zn plating | Butyl rubber + binder | 1.5 | SUS304 | 0.2 | 60 | No corrosion | None | |
| 3 | Ord. steel | Zn plating | Butyl rubber + binder | 1.5 | SUS304 | 0.1 | 60 | No corrosion | None | |
| 4 | Ord. steel | Zn plating | Epoxy binder | 0.3 | Ti | 0.2 | 60 | No corrosion | None | |
| 5 | Ord. steel | Zn plating | Urethane binder | 0.8 | Ti | 0.2 | 60 | No corrosion | None | |
| 6 | Ord. steel | Tar epoxy coating (100 µm) | Epoxy binder | 0.3 | Ti | 0.2 | 60 | No corrosion | None | |
| 7 | Ord. steel | Polyester coating (120µm) | Butyl rubber + binder | 1.5 | Ti | 0.2 | 60 | No corrosion | None | |
| 8 | Ord. steel | 5% Al-Zn plating | Epoxy binder | 0.3 | Ti | 0.2 | 60 | No corrosion | None | |
| 9 | Ord. steel | Al plating | Butyl rubber + binder | 1.5 | Ti | 0.2 | 60 | No corrosion | None | |
| 10 | Ord. steel | 11Al.3Mg-0.5Si-Zn plating | Epoxy binder | 0.3 | Ti | 0.2 | 60 | No corrosion | None | |
| 11 | Ord. steel | Zn plating | Butyl rubber + binder | 1.5 | Ti | 0.1 | 60 | No corrosion | None | |
| 12 | Ord. steel | Zn plating | None | - | None | - | - | Red rust | Yes | Comp. ex. |
| 13 | Ord. steel | 5% Al-Zn plating | None | - | None | - | - | Red rust | Yes | |
| 14 | Ord. steel | 11Al-3Mg-0.5Si-Zn plating | None | - | None | - | - | White rust | None | |
| 15 | Ord. steel | Tar epoxy coating (100 µm) | None | - | None | - | - | Many spots of red rust | Yes | |
| 16 | Ord. steel | Polyester coating (120µm) | None | - | None | - | - | Spots of red rust | Yes | |
| 17 | Al | Clear coating | None | - | None | - | | White rust | Yes | |
| 18 | Ord. steel | Zn plating | Epoxy binder | 0.3 | Ti | 0.1 | 40 | Brittle rust from ends of coating | None | |
| 19 | Ord. steel | Zn plating | Epoxy binder | 0.3 | Cu | 0.2 | 60 | Severe copper corrosion | None | |

| | | | | | | | | | | |
|---|---|---|---|---|---|---|---|---|---|---|
| Note) *1 :Coating length is same length above and below embedded interface, only top side shown. | | | | | | | | | | |

### Example 2

Under the conditions prescribed in JIS H 8641, steel pipes of outside diameters of 43mmφ, lengths of 100 mm, and thicknesses of 3.5 mm plated with zinc were brush coated on their outside surfaces with the ordinary temperature curing epoxy resin coatings comprising a solution containing 49 wt% of an epoxy resin varnish, 30 wt% of a bulk pigment (titanium oxide), about 2 wt% of other additives, and 6 wt% of a solvent and polymerizing by 13 wt% of a curing agent into which the pigments shown in Table 3 were added in the wt% with respect to the coatings shown so as to thereby form coating layers comprised of corrosion-proofing materials. At this time, for measurement of the ability of each of the pigments to neutralize ammonium, 100 g of an aqueous solution containing 5% ammonium ions was prepared, the pigment described in the table was added in a powder state in an amount of 1%, and the amount when the pH fell to 1 or more was deemed as the ability to neutralize ammonium ions. Further, for the type of the curing agent, one using an isocyanate-based resin and one using a polyamide amine-based resin were used for the tests.

These test steel pipes were cut in the longitudinal directions down to the Zn plating layers to widths of 1 mm and lengths of 50 mm by cutter knives and immersed in 3% NaCl at 40°C for one month, in a 0.01 mol/kg NaOH aqueous solution at ordinary temperature for one month, and immersed in a 0.01 mol/kg ammonia water solution at ordinary temperature for one month and then evaluated for the corrosion and swelling of the cut parts by the average values. The results are also shown in Table 3. It was learned that the examples of the present invention are superior in durability against solutions containing ammonium ions. Further, it was learned that samples with over 50 µm thicknesses of coatings containing 1 to 30 wt% of pigments having the ability to neutralize ammonium ions were more superior in durability.

**Table 3**

| No. | Pigment ingredient | Ratio | Curing agent | Ammonium neutralization | Am't in coating (%) | Coated thickness (µm) | width of swelling of cross cuts after immersion (mm) | | | Remarks |
|---|---|---|---|---|---|---|---|---|---|---|
| | | | | | | | NaCl | NaOH | NH₃ | |
| 20 | Mg phosphate | 6 | Isocyanate-based | G | 5.0 | 186 | 2.2 | 1.3 | 1.9 | Inv. ex. |
| 21 | Mg phosphate + Al phosphate | 1:1 | Isocyanate-based | G | 5.0 | 215 | 4.0 | 1.1 | 3.2 | |
| 22 | Mg phosphate + Al phosphate | 1:1 | Polyamide amine-based | G | 5.0 | 230 | 5.0 | <0.5 | 2.9 | |
| 23 | Ammonium vanadinate | 6 | Isocyanate-based | G | 5.0 | 177 | 5.0 | 1.0 | 7.8 | |
| 24 | Zn borate | 6 | Isocyanate-based | G | 5.0 | 192 | 4.4 | <0.5 | 6.5 | |
| 25 | Mg phosphate + Al phosphate + Ca sulfate | 2:2:1 | Isocyanate-based | G | 1.5 | 166 | 4.7 | <0.5 | 4.5 | |
| 26 | Mg phosphate + Al phosphate + Ca sulfate | 2:2:1 | Isocyanate-based | G | 5.0 | 183 | 0.8 | <0.5 | 2.3 | |
| 27 | Mg phosphate + Al phosphate + Ca sulfate | 2:2:1 | Isocyanate-based | G | 25.0 | 213 | 1.44 | <0.5 | 2.0 | |
| 28 | Ca sulfate | 6 | Isocyanate-based | G | 5.0 | 169 | 1.1 | 1.1 | 1.1 | |
| 29 | Mg phosphate + Ca sulfate | 4:1 | Isocyanate-based | G | 5.0 | 174 | 0.9 | <0.5 | 1.0 | |
| 30 | Al phosphate + Ca sulfate | 4:1 | Isocyanate-based | G | 5.0 | 199 | 0.8 | <0.5 | 1.3 | |
| 31 | Zn borate + Mg phosphate | 1:1 | Isocyanate-based | G | 5.0 | 232 | 2.2 | <0.5 | 4.4 | |
| 32 | Zn borate + Mg phosphate + Al phosphate | 1:1:1 | Isocyanate-based | G | 5.0 | 162 | 3.2 | <0.5 | 5.4 | |
| 33 | Zn borate + Mg phosphate + Ca sulfate | 2:2:1 | Isocyanate-based | G | 5.0 | 385 | 1.2 | <0.5 | 2.6 | |
| 34 | Ca phosphate + Zn phosphate | 1:1 | Isocyanate-based | G | 5.0 | 233 | 3.4 | 1.3 | 6.4 | |
| 35 | Mg phosphate + Al phosphate | 1:1 | Isocyanate-based | G | 5.0 | 98 | 6.7 | <0.5 | 9.7 | |
| 36 | Mg phosphate + Al phosphate + Ca sulfate | 2:2:1 | Isocyanate-based | G | 0.8 | 167 | 4.6 | <0.5 | 9.6 | |
| 37 | Mg phosphate + Al phosphate + Ca sulfate | 2:2:1 | Isocyanate-based | G | 40 | 214 | 6.6 | <0.5 | 2.4 | |
| 38 | Mg phosphate + Al phosphate + Ca sulfate | 2:2:1 | Isocyanate-based | G | 5.0 | 60 | 7.2 | <0.5 | 6.2 | |
| 39 | Nothing added | - | Isocyanate-based | - | - | 212 | 20 | 4.5 | 16.5 | Comp. ex. |
| 40 | Nothing added | - | Polyamide amine-based | - | - | 189 | 20 | 3.8 | 18.2 | |
| 41 | Talc | - | Isocyanate-based | P | 5.0 | 178 | 16 | 1.5 | 18.5 | |
| 42 | Barium sulfate | - | Isocyanate-based | P | 5.0 | 222 | 8.9 | 2.2 | 20 | |

### Example 3

Steel pipes of inside diameters of 150mmφ, thicknesses of 6 mm, and lengths of 3 m were zinc plated by the method prescribed in JIS H8641 and covered by the corrosion-proofing material of the specification 1 shown in Example 1 to a range of 500 mm from a location 500 mm from the bottom end of the surface, covered by the corrosion-proofing material of the specification 7 of Example 1, or covered by the corrosion-proofing material of the specification 26 of Example 2 and, as a comparative example, a steel pipe not covered by an corrosion-proofing material were prepared. These steel pipes were embedded in concrete so that locations 750 mm from the bottom ends were exposed at the concrete surface. Soil was covered over the top of these to a thickness of 50 mm to obtain test samples.

These test samples were sprayed once a day with solutions of the ingredients shown in Table 1. These were examined after the elapse of one year, whereupon it was found that the comparative material was corroded and rusted red at the plating at the location embedded in the soil, but the three steel pipes of the examples of the present invention showed no corrosion at all. This demonstrated that the steel post of the present invention is superior in durability.

While the invention has been described with reference to specific embodiments chosen for purpose of illustration, it should be apparent that numerous modifications could be made thereto by those skilled in the art without departing from the basic concept and scope of the invention.

## Claims

1. A steel post having corrosion controllability of an embedded part comprising a steel post having a corrosion-proofing coating which is provided with a coating layer comprising a corrosion-proofing material superior in durability against an aqueous solution containing ammonium ions along the outside of the steel post to at least 50 mm up to the atmosphere side and down to the embedded material side from a top end of an interface where the steel post and material embedded in contact each other, wherein said corrosion-proofing material is a corrosion resistant metal material of a thickness of at least 0.1 mm having an organic resin binder layer at the steel post side and the corrosion resistance metal material comprises at least one selected from titanium and titanium alloy, nickel and nickel alloy, high corrosion resistance stainless steel, gold, silver and platinum.

2. A steel post having corrosion controllability of an embedded part comprising a steel post having a corrosion-proofing coating which is provided with a coating layer comprising a corrosion-proofing material superior in durability against an aqueous solution containing ammonium ions along the outside of the steel post to at least 50 mm up to the atmosphere side and down to the embedded material side from a top end of an interface where the steel post and material embedded in contract each other, wherein said corrosion-proofing material is an expoxy-based coating of a thickness of at least 50 µm containing 1 wt% to 30 wt% of a pigment having an ability to neutralize ammonium ions and the pigment comprises at least one selected from phosphate of calcium, magnesium, aluminium and zinc, zinc borate, calcium sulfate, ammonium vanadinate and vanadium oxide and mixtures thereof.

3. A steel post having corrosion controllability of an embedded part according to claim 1 or 2, wherein the corrosion-proofing coating is a zinc-based plating.

## Patentansprüche

1. Stahlpfosten mit Korrosionskontrollierbarkeit eines versenkten Teils, das einen Stahlpfosten mit einer Korrosionsschutzbeschichtung aufweist, die versehen ist mit einer Auftragsschicht mit einem Korrosionsschutzmaterial mit überlegener Beständigkeit gegen eine Ammoniumionen enthaltende wäßrige Lösung entlang der Außenseite des Stahlpfostens bis auf mindestens 50 mm nach oben zur Atmosphärenseite und nach unten zur versenkten Materialseite von einem oberen Ende einer Grenzfläche, an der der Stahlpfosten und versenktes Material einander kontaktieren, wobei das Korrosionsschutzmaterial ein korrosionsbeständiges Metallmaterial mit einer Dicke von mindestens 0,1 mm mit einer Bindemittelschicht aus organischem Harz an der Stahlpfostenseite ist und das korrosionsbeständige Metallmaterial Titan, eine Titanlegierung, Nickel, eine Nickellegierung, hochkorrosionsbeständigen Edelstahl, Gold, Silber und/oder Platin aufweist.

2. Stahlpfosten mit Korrosionskontrollierbarkeit eines versenkten Teils, das einen Stahlpfosten mit einer Korrosionsschutzbeschichtung aufweist, die versehen ist mit einer Auftragsschicht mit einem Korrosionsschutzmaterial mit überlegener Beständigkeit gegen eine Ammoniumionen enthaltende wäßrige Lösung entlang der Außenseite des Stahlpfostens bis auf mindestens 50 mm nach oben zur Atmosphärenseite und nach unten zur versenkten Materialseite von einem oberen Ende einer Grenzfläche, an der der Stahlpfosten und versenktes Material einander kontaktieren, wobei das Korrosionsschutzmaterial eine Beschichtung auf Epoxidbasis mit einer Dicke von mindestens 50 µm ist, die 1 Gew.-% bis 30 Gew.-% eines Pigments mit einer Fähigkeit zum Neutralisieren von Ammoniumionen enthält, und das Pigment Calciumphosphat, Magnesiumphosphat, Aluminiumphosphat, Zinkphosphat, Zinkborat, Calciumsulfat, Ammoniumvanadinat, Vanadiumoxid und/oder deren Mischungen aufweist.

3. Stahlpfosten mit Korrosionskontrollierbarkeit eines versenkten Teils nach Anspruch 1 oder 2, wobei die Korrosionsschutzbeschichtung eine Plattierung auf Zinkbasis ist.

## Revendications

1. Montant en acier ayant une caractéristique de contrôle de corrosion d'une partie enfoncée comprenant un montant en acier ayant un revêtement résistant à la corrosion qui est prévu avec une couche de revêtement comprenant un matériau résistant à la corrosion du point de vue de la durabilité contre une solution aqueuse contenant des ions d'ammonium le long de l'extérieur du montant en acier sur au moins 50 mm jusqu'au côté de l'atmosphère et descendant du côté du matériau enfoncé à partir d'une extrémité supérieure d'une interface où le montant en acier et le matériau enfoncé sont en contact entre eux, dans lequel ledit matériau résistant à la corrosion est un matériau métallique résistant à la corrosion d'une épaisseur d'au moins 0,1 mm ayant une couche de liant en résine organique du côté du montant en acier et le matériau métallique résistant à la corrosion comprend au moins l'un parmi le titane et l'alliage de titane, le nickel et l'alliage de nickel, l'acier inoxydable très résistant à la corrosion, l'or, l'argent et le platine.

2. Montant en acier ayant une caractéristique de contrôle de corrosion d'une partie enfoncée comprenant un montant en acier ayant un revêtement résistant à la corrosion qui est prévu avec une couche de revêtement comprenant un matériau résistant à la corrosion supérieur du point de vue de la durabilité contre une solution contenant des ions d'ammonium le long de l'extérieur du montant en acier sur au moins 50 mm jusqu'au côté de l'atmosphère et descendant du côté du matériau enfoncé à partir d'une extrémité supérieure d'une interface où le montant en acier et le matériau enfoncé sont en contact entre eux, dans lequel ledit matériau résistant à la corrosion est un revêtement à base d'époxy d'une épaisseur d'au moins 50 µm contenant de 1 % en poids à 30 % en poids d'un pigment ayant une capacité à neutraliser les ions d'ammonium et le pigment comprend au moins l'un parmi le phosphate de calcium, de magnésium, d'aluminium et de zinc, le borate de zinc, le sulfate de calcium, le vanadate d'ammonium et l'oxyde de vanadium et leurs mélanges.

3. Montant en acier ayant une caractéristique de contrôle de corrosion d'une partie enfoncée selon la revendication 1 ou 2, dans lequel le revêtement résistant à la corrosion est un plaquage à base de zinc.
